# EUROPÄISCHE PATENTSCHRIFT

(11) **EP 4 098 478 B1**
(45) Veröffentlichungstag und Bekanntmachung des Hinweises auf die Patenterteilung: **09.08.2023**
(21) Anmeldenummer: 21177509.3
(22) Anmeldetag: 02.06.2021
(51) Int. Cl.: B60L 53/18, B60L 53/31, B60L 53/30

(54) **KABELAUFNAHME FÜR EIN ALS SPIRALKABEL AUSGEFÜHRTES LADEKABEL EINER LADESTATION FÜR ELEKTRISCHE FAHRZEUGE**
CABLE RECEPTACLE FOR A CHARGING CABLE OF A CHARGING STATION FOR ELECTRIC VEHICLES WITH A SPIRAL DESIGN
LOGEMENT DE CÂBLE POUR UN CÂBLE DE CHARGE CONÇU SOUS LA FORME DE CÂBLE EN SPIRALE POUR UNE STATION DE CHARGE POUR VÉHICULES ÉLECTRIQUES

(43) Veröffentlichungstag der Anmeldung: 07.12.2022
(73) Patentinhaber: Digital Elektronik GmbH, 5083 St. Leonhard/Salzburg (AT)
(72) Erfinder: Auer, Johannes, 5020 Salzburg (AT)
(74) Vertreter: Karakatsanis, Georgios

(56) Entgegenhaltungen:
- DE-A1-102011 109 414
- US-B2- 10 673 221

## Beschreibung

Die vorliegende Erfindung bezieht sich auf eine Kabelaufnahme für ein als Spiralkabel ausgeführtes Ladekabel einer Ladestation für elektrische Fahrzeuge gemäß dem Oberbegriff des Patentanspruchs 1. Des Weiteren bezieht sich die Erfindung auf eine Ladestation für elektrische Fahrzeuge.

Aus dem Stand der Technik ist bekannt, bei Ladestationen für elektrische Fahrzeuge fest mit den Ladestationen verbundene Spiralkabel aufweisend einen Ladestecker zu verwenden, welche das jeweilige Fahrzeug mit der Ladestation verbinden und in einer Kabelaufnahme der Ladestationen aufgenommen werden. Spiralkabel weisen viele Vorteile auf, beispielsweise eine große Kabelreichweite und damit verbundene Flexibilität sowie die Möglichkeit, viel Kabel in der Kabelaufnahme der Ladestation unterzubringen.

Ferner ist das Handling der Spiralkabel im Vergleich zu glatten Kabeln angenehmer, wobei zudem vermieden wird, dass die Kabel am Boden liegen und in nachteiliger Weise verschmutzt werden. Ein weiterer Vorteil von Spiralkabeln ist die Tatsache, dass sich Spiralkabel von selbst zusammenziehen. Hierbei kann es jedoch nach dem Stand der Technik in nachteiliger Weise dazu kommen, dass Spiralkabel beim Zusammenziehen an Kanten der Ladestationen hängenbleiben und/oder sich in sich verdrehen können, wodurch das Handling erschwert wird und das Kabel verknoten kann.

Der vorliegenden Erfindung liegt die Aufgabe zugrunde, eine Kabelaufnahme für ein als Spiralkabel ausgeführtes Ladekabel einer Ladestation für elektrische Fahrzeuge anzugeben, durch die ein Hängenbleiben des Spiralkabels beim Einziehen verhindert wird. Zudem soll gewährleistet werden, dass sich das Ladekabel beim Zusammenziehen nicht in sich verdreht. Ferner soll eine Ladestation für elektrische Fahrzeuge angegeben werden.

Diese Aufgabe wird für eine Kabelaufnahme durch die Merkmale der unabhängigen Patentansprüche 1 und 5 gelöst. Eine Ladestation für elektrische Fahrzeuge ist Gegenstand des Patentanspruchs 10. Weitere erfindungsgemäße Ausgestaltungen und Vorteile gehen aus den entsprechenden Unteransprüchen hervor.

Demnach wird eine Kabelaufnahme für ein als Spiralkabel ausgeführtes Ladekabel einer Ladestation für elektrische Fahrzeuge vorgeschlagen, wobei ein Ende des Ladekabels an eine Stromversorgung angeschlossen ist und über eine Fixierung fest mit der Kabelaufnahme verbunden ist und das andere Ende des Ladekabels einen Stecker zur Verbindung mit einem Fahrzeug aufweist, umfassend einen Aufbewahrungsraum für das Ladekabel und eine Öffnung für den Durchtritt des Ladekabels, welche zwischen der Öffnung und dem Aufbewahrungsraum einen Führungsbereich für das Ladekabel aufweist, der an dem der Öffnung zugewandten Ende symmetrisch oder asymmetrisch konvex trichterförmig ausgeführt ist und sich in die gegenüber dem Ende abgewandte Richtung verjüngt.

Hierbei entspricht vorzugsweise der kleinste Durchmesser des Führungsbereiches im Wesentlichen dem Spiraldurchmesser des Ladekabels und kann um ein geringes, vorgegebenes Maß größer als dieser Durchmesser sein, wobei der trichterförmige Bereich eine Krümmung aufweist, durch die ein Hängenbleiben des Kabels weitgehend vermieden bzw. ausgeschlossen ist. Das Ladekabel kann dadurch beim Ein- oder Ausziehen in vorteilhafter Weise im Bereich der Öffnung nicht mit Kanten in Berührung kommen.

Das der Öffnung abgewandte Ende des Führungsbereiches kann gemäß einer Ausgestaltung der Erfindung ebenfalls symmetrisch oder asymmetrisch konvex trichterförmig ausgeführt sein, wobei der Aufbewahrungsraum beliebig ausgeführt sein kann.

Alternativ kann der Aufbewahrungsraum als Fortsetzung des Führungsbereiches zylinderförmig ausgeführt sein, wobei das der Öffnung abgewandte Ende des Führungsbereiches zylinderförmig ausgeführt ist; die Durchmesser des Aufbewahrungsraumes und des der Öffnung abgewandten Endes des Führungsbereiches sind gleich und entsprechen im Wesentlichen dem Spiraldurchmesser des Ladekabels. Die Durchmesser können auch um ein geringes, vorgegebenes Maß größer als der Spiraldurchmesser des Ladekabels sein.

Das Ladekabel kann dadurch beim Ein- oder Ausziehen in vorteilhafter Weise nicht mit Kanten in Berührung kommen.

Die Fixierung für das Ladekabel und die Stromversorgung, an die das Ladekabel angeschlossen ist, sind im Aufbewahrungsraum, vorzugsweise in einem Bereich im Wesentlichen gegenüber der Öffnung für den Durchtritt des Ladekabels angeordnet.

Gemäß einer Ausgestaltung der Erfindung ist ein Durchmesser des Führungsbereiches an dessen der Öffnung zugewandten Ende kleiner als der Stecker, so dass dieser bei Nichtverwendung an diesem Durchmesser anliegt und von außen zugänglich bleibt während sich das Ladekabel in der Kabelaufnahme befindet.

Gemäß einer Weiterbildung der Erfindung weist die Kabelaufnahme eine Steckerhalterung zur Aufnahme des Steckers bei Nichtverwendung auf. Auch in diesem Fall kann ein Durchmesser des Führungsbereiches an dessen der Öffnung zugewandten Ende kleiner sein als der Stecker.

Alternativ zur beschriebenen Ausgestaltungen des Führungsbereiches wird eine Kabelaufnahme für ein als Spiralkabel ausgeführtes Ladekabel einer Ladestation für elektrische Fahrzeuge vorgeschlagen, wobei ein Ende des Ladekabels an eine Stromversorgung angeschlossen ist und über eine Fixierung fest mit der Kabelaufnahme verbunden ist und das andere Ende des Ladekabels einen Stecker zur Verbindung mit einem Fahrzeug aufweist, umfassend einen Aufbewahrungsraum für das Ladekabel und eine Öffnung für den Durchtritt des Ladekabels, wobei die Fixierung für das Ladekabel und die Stromversorgung im Aufbewahrungsraum, vorzugsweise in einem Bereich im Wesentlichen gegenüber der Öffnung angeordnet sind, bei der im Aufbewahrungsraum ein Führungsstab fest angeordnet ist, welcher sich von der Fixierung bis zur Öffnung erstreckt. Der Führungsstab kann in Abhängigkeit der Ausführung des Aufbewahrungsraumes gerade oder gekrümmt ausgeführt sein.

Der Führungsstab weist an seinem der Öffnung zugewandten Ende eine geeignete Krümmung und Form auf, um ein Hängenbleiben des Kabels zu vermeiden. Insbesondere kann dieses Ende des Führungsstabs abgerundet ausgeführt sein und/oder sich in Richtung der Öffnung verjüngen.

Die erfindungsgemäße Kabelaufnahme kann als separates Bauteil ausgeführt oder in eine Ladestation integriert sein, die demnach eine erfindungsgemäße Kabelaufnahme aufweist, wobei bei einer in eine Ladestation integrierten Kabelaufnahme die Stromversorgung in der Ladestation vorgesehen ist und die Fixierung für das Kabel fest mit der Ladestation verbunden ist (die Kabelaufnahme ist Teil der Ladestation, so dass der Aufbewahrungsraum und der Führungsbereich in der Ladestation vorgesehen sind). Für den Fall, dass die Kabelaufnahme in eine Ladestation integriert ist und eine Steckerhalterung vorgesehen ist, ist diese an der Ladestation vorgesehen.

Eine erfindungsgemäße Ladestation weist eine Kabelaufnahme gemäß der Erfindung auf.

Die Erfindung wird im Folgenden anhand der beigefügten Figuren beispielhaft näher erläutert, wobei die Merkmale detailliert beschrieben werden, die für die vorliegende Erfindung von Bedeutung sind. Es zeigen:
Figur 1a: Eine schematische Ansicht einer Ladestation für elektrische Fahrzeuge in die eine gemäß einer Ausgestaltung der Erfindung ausgeführte Kabelaufnahme für ein als Spiralkabel ausgeführtes Ladekabel integriert ist, wobei das Spiralkabel eingezogen ist;
Figur 1b: Eine weitere schematische Ansicht einer Ladestation für elektrische Fahrzeuge in die eine gemäß einer Ausgestaltung der Erfindung ausgeführte Kabelaufnahme für ein als Spiralkabel ausgeführtes Ladekabel integriert ist, wobei das Spiralkabel eingezogen ist;
Figur 2: Eine schematische Ansicht der Ladestation für elektrische Fahrzeuge nach Figur 1, wobei ein elektrisches Fahrzeug zum Laden angeschlossen ist;
Figur 3: Schematische Darstellungen zur Veranschaulichung des der Ausgestaltung einer Kabelaufnahme gemäß Figuren 1 und 2 zugrundeliegenden Prinzips;
Figur 4: Schematische Darstellungen zur Veranschaulichung des einer weiteren Ausgestaltung einer Kabelaufnahme zugrundeliegenden Prinzips; und
Figur 5: Schematische Darstellungen zur Veranschaulichung des einer weiteren Ausgestaltung einer Kabelaufnahme zugrundeliegenden Prinzips.

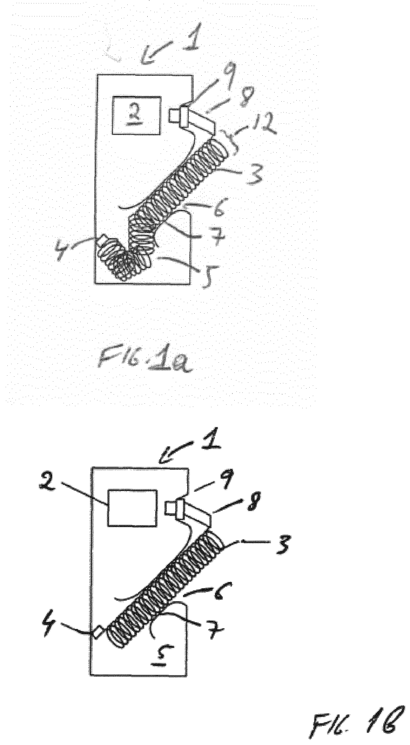

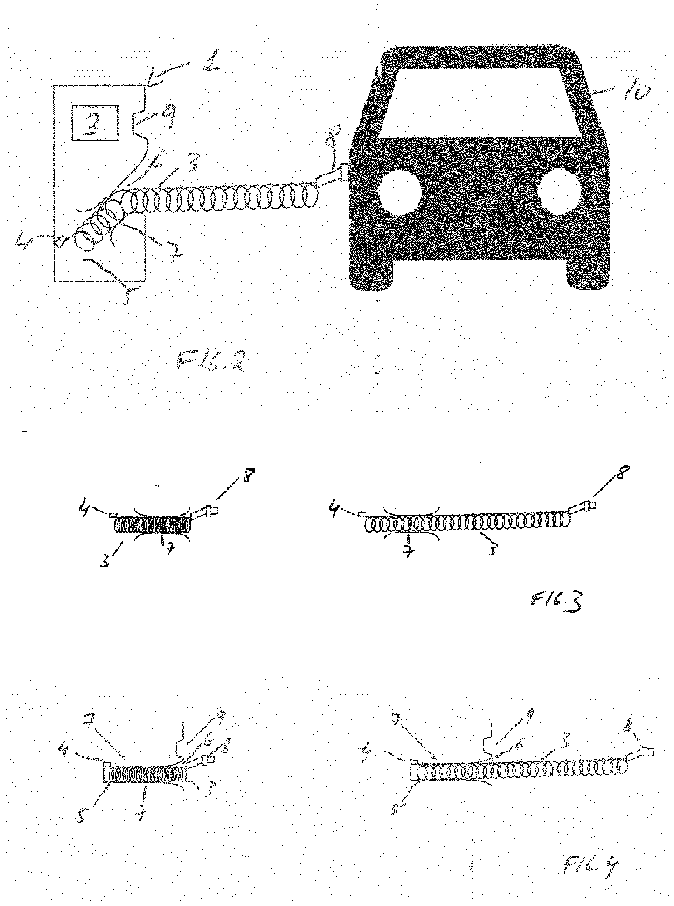

In Figuren 1a, 1b und 2 ist eine Ladestation 1 für elektrische Fahrzeuge dargestellt. Sie umfasst nach dem Stand der Technik eine Ladesteuerung 2 sowie weitere nach dem Stand der Technik erforderliche Komponenten und ein als Spiralkabel ausgeführtes Ladekabel 3 mit einem Stecker 8 zum Anschließen an ein elektrisches Fahrzeug, welches bei dem gezeigten Beispiel an eine in der Ladestation 1 vorgesehene Stromversorgung angeschlossen ist und über eine Fixierung 4 fest mit der Ladestation 1 verbunden ist.

Gemäß einer Ausgestaltung der Erfindung und bezugnehmend auf Figuren 1a, 1b und 2 umfasst die Ladestation 1 eine in der Ladestation 1 integrierte Kabelaufnahme umfassend einen Aufbewahrungsraum 5 für das Ladekabel 3 und eine Öffnung 6 für den Durchtritt des Ladekabels 3, wobei die Kabelaufnahme zwischen der Öffnung 6 und dem Aufbewahrungsraum 5 einen Führungsbereich 7 für das Ladekabel 3 aufweist.

Der Führungsbereich 7 ist an dem der Öffnung 6 zugewandten Ende symmetrisch oder asymmetrisch konvex trichterförmig ausgeführt und verjüngt sich in die gegenüber dem Ende abgewandte Richtung; bei dem gezeigten Beispiel ist der Führungsbereich 7 an dem der Öffnung 6 zugewandten Ende asymmetrisch konvex trichterförmig ausgeführt. Durch die Krümmung bzw. Ausgestaltung des der Öffnung 6 zugewandten Endes wird ein Hängenbleiben des Ladekabels 3 weitgehend vermieden bzw. ausgeschlossen.

Des Weiteren ist bei dem gezeigten Beispiel das der Öffnung 6 abgewandte Ende des Führungsbereiches 7 konvex symmetrisch trichterförmig ausgeführt, so dass ein Hängenbleiben des Ladekabels 3 weitgehend vermieden bzw. ausgeschlossen wird. Das der Öffnung 6 abgewandte Ende des Führungsbereiches 7 kann auch zylinderförmig mit abgerundeten Kanten ausgeführt sein.

Wie Figuren 1a, 1b und 2 zu entnehmen ist, entspricht der kleinste Durchmesser des Führungsbereiches 7, der in einem Bereich zwischen den beiden trichterförmig ausgeführten Enden zylinderförmig ausgeführt ist, im Wesentlichen dem Spiraldurchmesser 12 des Ladekabels 3. Der kleinste Durchmesser des Führungsbereiches 7 kann auch um ein geringes, vorgegebenes Maß größer als der Spiraldurchmesser 12 sein.

Bei dem in Figuren 1a, 1b und 2 gezeigten Beispiel weist die Ladestation 1 eine Steckerhalterung 9 zur Aufnahme des Steckers 8 des Ladekabels 3 bei Nichtverwendung d.h. bei eingezogenem Spiralkabel 3 auf. In Figuren 1a und 1b ist die Ladestation 1 bei eingezogenem Spiralkabel 3 bei jeweils unterschiedlicher Länge des Ladekabels 3 dargestellt, wohingegen in Figur 2 die Situation veranschaulicht wird, bei der ein elektrisches Fahrzeug 10 über den Stecker 8 und das Ladekabel 3 an die Ladestation 1angeschlossen ist.

Die Fixierung 4 für das Ladekabel 3 und die Stromversorgung, an die das Ladekabel 3 angeschlossen ist, sind im Aufbewahrungsraum 5 in einem Bereich im Wesentlichen gegenüber der Öffnung 6 angeordnet. Da bei dem Beispiel nach Figuren 1a, 1b und 2 die erfindungsgemäße Kabelaufnahme in eine Ladestation 1 integriert ist, ist die Stromversorgung in der Ladestation 1 vorgesehen, wobei die Fixierung 4 für das Ladekabel 3 fest mit der Ladestation 1 verbunden ist.

Im linken Teil der Figur 3 ist das Ladekabel 3 in der Kabelaufnahme im eingezogenen Zustand dargestellt, wobei der rechte Teil der Figur 3 das Ladekabel 3 im expandierten Zustand darstellt.

Alternativ zu der in Figuren 1a, 1b und 2 gezeigten Ausgestaltung des der Öffnung 6 abgewandten Endes des Führungsbereiches 7 kann vorgesehen sein, dass der Aufbewahrungsraum 5 als Fortsetzung des Führungsbereiches 7 zylinderförmig ausgeführt ist, wobei das der Öffnung 6 abgewandte Ende des Führungsbereiches 7 zylinderförmig ausgeführt ist. Die Durchmesser des Aufbewahrungsraumes 5 und des der Öffnung 6 abgewandten Endes des Führungsbereiches 7 sind gleich und entsprechen im Wesentlichen dem Spiraldurchmesser 12 des Ladekabels 3; die Durchmesser können auch um ein geringes, vorgegebenes Maß größer als der Spiraldurchmesser 12 sein.

Dies wird anhand Figur 4 veranschaulicht, wobei im linken Teil der Figur 4 das Ladekabel 3 in der Kabelaufnahme im eingezogenen Zustand dargestellt ist und wobei der rechte Teil der Figur 4 das Ladekabel 3 im expandierten Zustand darstellt.

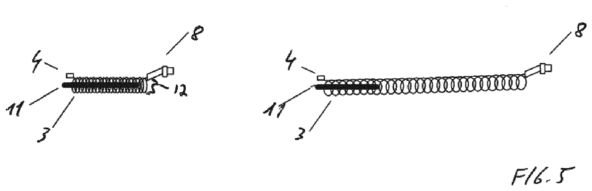

Gemäß einer weiteren Ausgestaltung der Erfindung, deren Prinzip anhand Figur 5 veranschaulicht wird, kann unabhängig von der Ausgestaltung des Aufbewahrungsraums und des Führungsbereiches das Ladekabel 3 um einen im Aufbewahrungsraum fest angeordneten Führungsstab 11 geführt werden, welcher sich von der Fixierung 4 des Ladekabels 3 bis zur Öffnung für den Durchtritt des Ladekabels 3 erstreckt. Im linken Teil der Figur 5 ist das Ladekabel 3 im eingezogenen Zustand dargestellt, wobei der rechte Teil der Figur 5 das Ladekabel 3 im expandierten Zustand dargestellt ist.

Der Führungsstab 11 kann erfindungsgemäß in Abhängigkeit der Ausführung des Aufbewahrungsraumes gerade oder gekrümmt ausgeführt sein.

Des Weiteren weist der Führungsstab 11 an seinem der Öffnung zugewandten Ende eine geeignete Krümmung und/oder Form auf, um ein Hängenbleiben des Kabels zu vermeiden. Insbesondere kann dieses Ende des Führungsstabs abgerundet ausgeführt sein und/oder sich in Richtung der Öffnung verjüngen.

Die Ausgestaltung umfassend einem Führungsstab 11 kann mit den Ausgestaltungen gemäß Figuren 1a, 1b, 2,3 und 4 kombiniert werden..

Der Durchmesser des Führungsstabs 11 ist kleiner als der Spiraldurchmesser 12 des Ladekabels 3 und beträgt gemäß einer vorteilhaften Weiterbildung zwischen 30% und 90% des Spiraldurchmessers, vorzugsweise 70%.

Die erfindungsgemäße Kabelaufnahme kann, wie bereits erläutert auch als separates Bauteil mit einem eigenen Gehäuse ausgeführt sein, das beispielsweise neben einer Ladestation angeordnet sein kann.

## Patentansprüche

1. Kabelaufnahme für ein als Spiralkabel ausgeführtes Ladekabel (3) einer Ladestation (1) für elektrische Fahrzeuge, wobei ein Ende des Ladekabels (3) an eine Stromversorgung angeschlossen ist und über eine Fixierung (4) fest mit der Kabelaufnahme verbunden ist und das andere Ende des Ladekabels (3) einen Stecker (8) zur Verbindung mit einem Fahrzeug (10) aufweist, wobei sie einen Aufbewahrungsraum (5) für das Ladekabel (3) und eine Öffnung (6) für den Durchtritt des Ladekabels (3) umfasst und zwischen der Öffnung (6) und dem Aufbewahrungsraum (5) einen Führungsbereich (7) für das Ladekabel (3) aufweist, **dadurch gekennzeichnet, dass** an dem der Öffnung (6) zugewandten Ende symmetrisch oder asymmetrisch konvex trichterförmig ausgeführt ist und sich in die gegenüber dem Ende abgewandte Richtung verjüngt, wobei die Fixierung (4) für das Ladekabel (3) und die Stromversorgung im Aufbewahrungsraum (5) angeordnet sind.

2. Kabelaufnahme für ein als Spiralkabel ausgeführtes Ladekabel (3) einer Ladestation (1) für elektrische Fahrzeuge nach Anspruch 1, **dadurch gekennzeichnet, dass** das der Öffnung (6) abgewandte Ende des Führungsbereiches (7) symmetrisch oder asymmetrisch konvex trichterförmig ausgeführt ist.

3. Kabelaufnahme für ein als Spiralkabel ausgeführtes Ladekabel (3) einer Ladestation (1) für elektrische Fahrzeuge nach Anspruch 2, **dadurch gekennzeichnet, dass** der kleinste Durchmesser des Führungsbereiches (7), der in einem Bereich zwischen den beiden trichterförmig ausgeführten Enden zylinderförmig ausgeführt ist, im Wesentlichen dem Spiraldurchmesser (12) des Ladekabels (3) entspricht oder um ein geringes, vorgegebenes Maß größer als der Spiraldurchmesser (12) ist.

4. Kabelaufnahme für ein als Spiralkabel ausgeführtes Ladekabel (3) nach Anspruch 1, **dadurch gekennzeichnet, dass** das der Öffnung (6) abgewandte Ende des Führungsbereiches (7) zylinderförmig ausgeführt ist und dass der Aufbewahrungsraum (5) als Fortsetzung des Führungsbereiches (7) zylinderförmig ausgeführt ist, wobei die Durchmesser des Aufbewahrungsraumes (5) und des der Öffnung (6) abgewandten Endes des Führungsbereiches (7) gleich sind und im Wesentlichen dem Spiraldurchmesser (12) des Ladekabels (3) entsprechen oder um ein geringes, vorgegebenes Maß größer als der Spiraldurchmesser (12) sind.

5. Kabelaufnahme für ein als Spiralkabel ausgeführtes Ladekabel (3) einer Ladestation (1) für elektrische Fahrzeuge (10), wobei ein Ende des Ladekabels (3) an eine Stromversorgung angeschlossen ist und über eine Fixierung (4) fest mit der Kabelaufnahme verbunden ist und das andere Ende des Ladekabels (3) einen Stecker (8) zur Verbindung mit einem Fahrzeug (10) aufweist, wobei sie einen Aufbewahrungsraum (5) für das Ladekabel (3) und eine Öffnung (6) für den Durchtritt des Ladekabels (3) umfasst, **dadurch gekennzeichnet dass** die Fixierung (4) für das Ladekabel (3) und die Stromversorgung im Aufbewahrungsraum (5) angeordnet sind und wobei im Aufbewahrungsraum (5) ein Führungsstab (11) fest angeordnet ist, welcher sich von der Fixierung (4) bis zur Öffnung (6) erstreckt.

6. Kabelaufnahme für ein als Spiralkabel ausgeführtes Ladekabel (3) nach Anspruch 5, **dadurch gekennzeichnet, dass** der Führungsstab (13) an seinem der Öffnung (6) zugewandten Ende abgerundet ausgeführt ist.

7. Kabelaufnahme für ein als Spiralkabel ausgeführtes Ladekabel (3) nach Anspruch 5 oder 6, **dadurch gekennzeichnet, dass** der Durchmesser des Führungsstabs (11) kleiner ist als der Spiraldurchmesser (12) des Ladekabels (3) und zwischen 30% und 90% des Spiraldurchmessers (12) beträgt.

8. Kabelaufnahme für ein als Spiralkabel ausgeführtes Ladekabel (3) nach einem der vorangehenden Ansprüche, **dadurch gekennzeichnet, dass** ein Durchmesser des Führungsbereiches (7) an dessen der Öffnung (6) zugewandten Ende kleiner als der Stecker (8) ist.

9. Kabelaufnahme für ein als Spiralkabel ausgeführtes Ladekabel (3) nach einem der vorangehenden Ansprüche, **dadurch gekennzeichnet, dass** sie als separates Bauteil ausgeführt oder in die Ladestation (1) integriert ist.

10. Ladestation (1) für elektrische Fahrzeuge, **dadurch gekennzeichnet, dass** sie eine Kabelaufnahme für ein als Spiralkabel ausgeführtes Ladekabel (3) nach einem der vorangehenden Ansprüche aufweist.

11. Ladestation (1) für elektrische Fahrzeuge nach Anspruch 10, **dadurch gekennzeichnet, dass** sie eine Steckerhalterung (9) zur Aufnahme des Steckers (4) des Ladekabels (3) aufweist.

## Claims

1. Cable receptacle for a charging cable (3) of a charging station (1) for electric vehicles, designed as a spiral cable, wherein one end of the charging cable (3) is connected to a power supply and is permanently connected to the cable holder by means of a fixture (4) and the other end of the charging cable (3) has a plug (8) for connecting to a vehicle (10),
wherein said receptacle comprises a storage space (5) for the charging cable (3) and an opening (6) for the passage of the charging cable (3) and has a guiding region (7) for the charging cable (3) between the opening (6) and the storage space (5),
**characterized in that** at the end facing the opening (6) the receptacle is designed symmetrically or asymmetrically convex in the shape of a funnel and tapers in the direction facing away from the end, wherein the fixture (4) for the charging cable (3) and the power supply are arranged in the storage space (5).

2. Cable receptacle for a charging cable (3) of a charging station (1) for electric vehicles, designed as a spiral cable, according to Claim 1,
**characterized in that** the end of the guiding region (7) facing away from the opening (6) is designed symmetrically or asymmetrically convex in the shape of a funnel.

3. Cable receptacle for a charging cable (3) of a charging station (1) for electric vehicles, designed as a spiral cable, according to Claim 2,
**characterized in that** the smallest diameter of the guiding region (7), which is cylindrical in a region between the two funnel-shaped ends, substantially corresponds to the spiral diameter (12) of the charging cable (3) or is larger than the spiral diameter (12) by a small, predetermined amount.

4. Cable receptacle for a charging cable (3) designed as a spiral cable, according to Claim 1,
**characterized in that** the end of the guiding region (7) facing away from the opening (6) is cylindrical and that the storage space (5), forming a continuation of the guiding region (7), is cylindrical, wherein the diameters of the storage space (5) and the end of the guiding region (7) facing away from the opening (6) are the same and substantially correspond to the spiral diameter (12) of the charging cable (3) or are larger than the spiral diameter (12) by a small, predetermined amount.

5. Cable receptacle for a charging cable (3) of a charging station (1) for electric vehicles (10), designed as a spiral cable, wherein one end of the charging cable (3) is connected to a power supply and is permanently connected to the cable holder by means of a fixture (4) and the other end of the charging cable (3) has a plug (8) for connecting to a vehicle (10), wherein
said receptacle comprises a storage space (5) for the charging cable (3) and an opening (6) for the passage of the charging cable (3),
**characterized in that** the fixture (4) for the charging cable (3) and the power supply are arranged in the storage space (5) and wherein a guide rod (11), which extends from the fixture (4) to the opening (6), is fixedly arranged in the storage space (5).

6. Cable receptacle for a charging cable (3) designed as a spiral cable, according to Claim 5,
**characterized in that** the guide rod (11) is rounded off at its end facing the opening (6).

7. Cable receptacle for a charging cable (3) designed as a spiral cable, according to Claim 5 or 6, **characterized in that** the diameter of the guide rod (11) is smaller than the spiral diameter (12) of the charging cable (3) and is between 30% and 90% of the spiral diameter (12).

8. Cable receptacle for a charging cable (3) designed as a spiral cable, according to any one of the previous claims,
**characterized in that** a diameter of the guiding region (7) at the end of the guiding region facing the opening (6) is smaller than the plug (8).

9. Cable receptacle for a charging cable (3) designed as a spiral cable, according to any one of the previous claims,
**characterized in that** it is designed as a separate component or is integrated into the charging station (1) .

10. Charging station (1) for electric vehicles,
**characterized in that** it has a cable receptacle for a charging cable (3) designed as a spiral cable according to any one of the previous claims.

11. Charging station (1) for electric vehicles according to Claim 10,
**characterized in that** it has a plug holder (9) for holding the plug (4) of the charging cable (3).

## Revendications

1. Porte-câble pour un câble de charge (3) conçu comme un câble spiralé d'une borne de recharge (1) pour véhicules électriques, dans lequel une extrémité du câble de charge (3) est connectée à une alimentation électrique et est solidaire du porte-câble via une fixation (4) et l'autre extrémité du câble de charge (3) comporte une prise (8) pour la connexion à un véhicule (10),
dans lequel il comprend un espace de stockage (5) pour le câble de charge (3) et une ouverture (6) pour le passage du câble de charge (3) et entre l'ouverture (6) et l'espace de stockage (5) une zone de guidage (7) pour le câble de charge (3), **caractérisé en ce que** au niveau duquel l'extrémité tournée vers l'ouverture (6) est conçue symétriquement ou asymétriquement en forme d'entonnoir convexe et se rétrécit dans la direction qui se détourne de l'extrémité, dans lequel la fixation (4) pour le câble de charge (3) et l'alimentation électrique est disposée dans l'espace de stockage (5).

2. Porte-câble pour un câble de charge conçu comme un câble spiralé (3) d'une borne de recharge (1) pour véhicules électriques selon la revendication 1, **caractérisé en ce que** l'extrémité qui se détourne de l'ouverture (6) de la zone de guidage (7) est conçue symétriquement ou asymétriquement en forme d'entonnoir convexe.

3. Porte-câble pour câble de charge (3) conçu comme un câble spiralé d'une borne de recharge (1) pour véhicule électrique selon la revendication 2, **caractérisé en ce que** le plus petit diamètre de la zone de guidage (7), qui est conçu cylindriquement dans une zone entre les deux extrémités en forme d'entonnoir, correspond essentiellement au diamètre de la spirale (12) du câble de charge (3) ou est supérieur au diamètre de la spirale (12) d'une petite quantité prédéterminée.

4. Porte-câble pour un câble de charge (3) conçu comme un câble spiralé selon la revendication 1, **caractérisé en ce que** l'extrémité qui se détourne de l'ouverture (6) de la zone de guidage (7) est conçue cylindriquement et que l'espace de stockage (5) est conçu cylindriquement comme un prolongement de la zone de guidage (7), dans lequel le diamètre de l'espace de stockage (5) et l'extrémité qui se détourne de l'ouverture (6) de la zone de guidage (7) sont identiques et correspondent essentiellement au diamètre de spirale (12) du câble de charge (3) ou sont plus grands que le diamètre de spirale (12) par une petite quantité prédéterminée.

5. Porte-câble pour un câble de charge conçu comme un câble spiralé (3) d'une borne de recharge (1) pour véhicules électriques (10), dans lequel une extrémité du câble de charge (3) est connecté à une alimentation électrique et une fixation (4) est fermement connectée au porte-câble et l'autre extrémité du câble de charge (3) présente une prise (8) pour la connexion à un véhicule (10), dans lequel il comprend un local de stockage (5) pour le câble de charge (3) et une ouverture (6) pour le passage du câble de charge (3), **caractérisé en ce que** la fixation (4) pour le câble de charge (3) et l'alimentation électrique est disposée dans l'espace de stockage (5) et dans lequel dans l'espace de stockage (5) une tige de guidage (11) est disposée de manière fixe, qui s'étend de la fixation (4) vers l'ouverture (6) .

6. Porte-câble pour un câble de charge (3) conçu comme un câble spiralé selon la revendication 5, **caractérisé en ce que** la tige de guidage (13) est arrondie à son extrémité tournée vers l'ouverture (6).

7. Porte-câble pour un câble de charge (3) conçu comme un câble spiralé selon la revendication 5 ou 6, **caractérisé en ce que** le diamètre de la tige de guidage (11) est inférieur au diamètre de spirale (12) du câble de charge (3) et compris entre 30% et 90% du diamètre de la spirale (12).

8. Porte-câble pour un câble de charge conçu comme un câble spiralé (3) selon une des revendications précédentes, **caractérisé en ce qu'**un diamètre de la zone de guidage (7) à son extrémité tournée vers l'ouverture (6) est inférieur à celui de la prise (8).

9. Porte-câble pour un câble de charge conçu comme un câble spiralé (3) selon une des revendications précédentes, **caractérisé en ce qu'**il est réalisé sous forme de composant séparé ou intégré à la borne de recharge (1).

10. Borne de recharge (1) pour véhicules électriques, **caractérisée en ce qu'**elle comporte un porte-câble pour un câble de recharge réalisé sous la forme d'un câble spiralé (3) selon une des revendications précédentes.

11. Borne de recharge (1) pour véhicules électriques selon la revendication 10, **caractérisée en ce qu'**elle comporte un support de prise (9) pour recevoir la prise (4) du câble de charge (3).
